(19) Europäisches Patentamt
European Patent Office
Office européen des brevets

(11) **EP 1 373 719 B1**

(12) **EUROPEAN PATENT SPECIFICATION**

(45) Date of publication and mention
of the grant of the patent:
**14.02.2007 Bulletin 2007/07**

(21) Application number: **02718736.8**

(22) Date of filing: **28.03.2002**

(51) Int Cl.:
*F03D 1/00* (2006.01)    *F03D 9/00* (2006.01)

(86) International application number:
**PCT/SE2002/000619**

(87) International publication number:
**WO 2002/079643 (10.10.2002 Gazette 2002/41)**

(54) **SYSTEM FOR A TURBINE WITH GASEOUS OR LIQUID WORKING MEDIUM**

SYSTEM FÜR EINE TURBINE MIT EINEM GASFÖRMIGEN ODER FLÜSSIGEN ARBEITSMEDIUM

SYSTEME POUR UNE TURBINE A MILIEU DE TRAVAIL GAZEUX OU LIQUIDE

(84) Designated Contracting States:
**AT BE CH CY DE DK ES FI FR GB GR IE IT LI LU MC NL PT SE TR**

(30) Priority: **30.03.2001 SE 0101150**

(43) Date of publication of application:
**02.01.2004 Bulletin 2004/01**

(73) Proprietor: **Deltawind AB**
**187 28 Täby (SE)**

(72) Inventor: **ENGSTRÖM, Staffan**
**S-181 31 Lidingö (SE)**

(74) Representative: **Nyberg, Bengt**
**DR. LUDWIG BRANN PATENTBYRA AB,**
**P.O. Box 17192**
**104 62 Stockholm (SE)**

(56) References cited:
**EP-A1- 0 853 197      EP-A2- 1 065 374**
**WO-A1-00/77394      US-A- 5 354 175**

- **HAU ERICH: 'Tower vibration and exitation by the rotor', 2000, WIND-TURBINES: FUNDAMENTALS, TECHNOLOGIES APPLICATION, ECONOMICS chapter 11.4.1, ISBN 3-540-57064-0 * page 350 ***

EP 1 373 719 B1

**Description**

**Field of the invention**

The invention relates to a system for a turbine with a gaseous or liquideous working medium, in particular a wind turbine for a wind turbine generator. The turbine comprises a shaft, which is rotatable at a certain angular frequency, a hub, on which at least one turbine blade is attached, and a hinge member, disposed between the shaft and the hub. The hinge member comprises a bearing and spring elements, together forming a rigidity against movements in the hinge member. The turbine blade has a mass inertia factor relatively to the hinge member and is adapted to move through the gaseous or liquideous flow, which has a flow direction essentially perpendicular to the rotational plane of said turbine blade and has a varying velocity in said direction, such that the system is exposed to disturbance forces. The invention also relates to a wind turbine generator with such a system.

**Background of the invention**

Conventionally, wind turbine generators have rigid hubs, which means that the blades of the wind turbine have a rigid connection with the hub. The function in acceptable when the number of blades is at least three, since three symmetrically arranged blades, to a certain extent, are capable of levelling out the imbalance forces that are created due to irregularities in the wind field. A reduction of the number of blades to two is desirable, since this means a considerable reduction of the blade cost as well as other advantages, such as a less complicated assembly. The yearly energy yield for the two-bladed turbine, calculated for a certain turbine diameter, is only reduced with 2-3%. However, a two-bladed, rigid hub wind turbine is exposed to considerable imbalance forces even during normal operation causing fatigue in the components of the turbine. This must be compensated by increased dimensions of all the main components, such that this two-bladed solution, due to the excessive cost, is no longer justified. As a consequence, this type of wind turbine is no longer manufactured.

The teetered hub became the solution of the problems of the two-bladed, rigid hub wind turbine. It is characterised by the two blades being rigidly fixed to a hub, which is hinged to the turbine shaft. US Patent No 4,565,929 discloses an example of a turbine, which is able to teeter $\pm 7°$ until making contact with the teeter stops. The function is satisfactory during normal conditions, which means that the fatigue behaviour is advantageous. However, during extreme wind conditions with high turbulence and wind shear, such contacts with the teeter stops may occur that result in more severe moments than in a rigid hub wind turbine. Thus, it is the extreme load cases that are critical. None of the turbines with this simple type of teeter hub have reached any widespread use.

In order to solve the problems caused by the extreme loads, it has been proposed to control the teeter movement by combining the teeter stops with damping. One example is disclosed in US Patent No 5,354,175, in which it is proposed to limit the teeter movement by a controllable hydraulic damping. None of these hub types have been used extensively, which is due to a lack of knowledge of how a hub should be designed in order to prevent a serious increase of the disturbance forces in the system under certain conditions.

**Basic idea of the invention**

The object of the present invention is to provide a system for a turbine, in particular a system for a wind turbine for a wind turbine generator, which minimises the effects of the imbalance forces caused by the irregularities in the wind field, and thus the risk of fatigue, and of the extreme loads in the structure.

The invention is based on the understanding that a wind turbine, e.g. a two bladed wind turbine, with a teeter hinge having a certain rigidity, in theory may be looked upon as a mass-spring system according to classical mechanics.

The wind field comprises both a systematic variation, wind shear, which means that the mean wind speed is higher during the upper part of the revolution of the turbine, and a stochastic variation, turbulence. It is obvious that the wind shear creates one load cycle for each revolution of the turbine in a, with the turbine, co-rotating system of co-ordinates. Also the less significant tower shadow (the air stream that is disturbed by the tower), creates the same variation. On further consideration it should be realised that also the turbulence will create components of the same frequency, since the turbine blades move swiftly (50-100 m/s) compared with the wind (about 5-25 m/s) and its irregularities. Each turbine blade will thus hit a specific irregularity of the wind several times, which means that the resulting disturbance also in this case will have a frequency $\omega_{disturbance}$ which is equal to the rotational angular frequency $\omega_{rotation}$, i.e.

$$(1) \qquad \omega_{disturbance} = \omega_{rotation}$$

In the following this frequency is denominated the *disturbance frequency.*

It should be noted that this condition is valid in a, with the turbine, co-rotating system of co-ordinates, which is relevant for those forces that affect the turbine. In a system of co-ordinates that is fixed to the nacelle or tower the disturbance frequency is proportional to the result of the multiplication of the number of blades and the rotational frequency.

The majority of today's wind turbines operate at a rotational speed (angular frequency), which normally varies with a few per cent, depending on the slip of the inductor generator generally used. This value may increase up to about ten per cent with a special generator design. Instead of fixed speed, the wind turbine operates within a rotational speed range. There are also generators with dual windings which operate within two different rotational speed ranges. It is possible to control the rotational speed to any value, usually a low at low wind speeds and a high at high wind speeds, by applying specific electric equipment. The rotational angular frequency of the turbine $\omega_{rotation}$ shall be construed in the present invention as the highest rotational speed range which is used during normal, main circuit connected operation. This is possible since the high rotational speeds normally is used when the wind speeds are fairly high or high and the wind turbine has a high output power, which constitute the operation conditions that are decisive for the dimensioning of the turbine.

The mass inertia factor of the turbine $J_{turbine}$ relatively to the teeter axis may be calculated. The contribution from the hub, however, is insignificant. Thus, the mass inertia factor of the turbine may be approximated as the mass inertia factor of the blades. The hinge member is assumed to be of the type, in which the movement is counteracted by springs, which makes it possible to calculate a spring constant k for the hinge member. The spring constant constitutes a value of the rigidity of the hinge member. According to classic mechanics, the eigenfrequency $\omega_{resonance}$ of the turbine in relation to the hinge may be calculated as

$$(2) \qquad \omega_{resonance} = \overline{k \ / \ Jturbin}$$

From now on this is called the *eigenfrequency of the teeter hinge.* It should be noted that, for clarity, the stabilising impact on teeter movements of the centrifugal force, i.e. increase of rigidity due to the centrifugal force, has not been analysed here.

In order to elucidate the general reaction of such a mass-spring-system on disturbances of varying frequencies, the amplification, i.e. the ratio of the amplitude of the system to the amplitude of the disturbance, has been studied. A moderate damping has been added to the system, in correspondence with an actual state in which the air will dampen the teetering movement of the blades and the hinge member may be furnished with damping elements.

The study reveals that a low disturbance frequency $\omega_{disturbance}$ in relation to the eigenfrequency of the teeter hinge $\omega_{resonance}$, i.e. the operation is subcritical according to classical mechanics, gives a system response that is slightly larger than the disturbance, i.e. the amplification is just exceeding 1, corresponding to an ideal hub with a relatively high degree of rigidity. It is further revealed that the amplification is large when the disturbing frequency and the eigenfrequency of the system are equal, i.e. the operation is critical. It is likely that earlier attempts to use teetering hubs with counteracting springs have given this effect. When the disturbing frequency is higher than the eigenfrequency, i.e. the operation is supercritical, the amplification is significantly lower.

The cases mentioned above illustrate the conditions during normal operation. A wind turbine with a teeter hinge having a certain rigidity additionally has the advantage that the states during extreme turbulence and wind shear, which happen a few times during the operational life of a wind turbine, can be handled with reasonable loads and teeter angles.

The conditions during normal operation primarily determine the fatigue of the materials of the structure, while the extreme operation states are decisive for the extreme loads. A hub with a certain rigidity presents an improved balance between the fatigue load cases and the extreme load cases.

The study as described above illustrates that operation in the range of large amplification of the disturbance, i.e. when the disturbing frequency and the eigenfrequency are equal, should be avoided. These results have been confirmed by simulations in the time domain with a reasonably comprehensive computer turbine model, said model correctly taking mass distribution, stationary and instationary aerodynamics, hinges, rigidity, damping, wind distribution, increase of rigidity due to the centrifugal force, etc, into consideration for wind turbines at different wind speeds. The simulations has revealed that the moment in the hub becomes as much as ten times larger when the rigidity of the hub has the critical value as compared with a higher or lower value.

As mentioned above, the degree of criticality depends on the relations between the disturbing frequency, the mass inertia factor of the turbine and the rigidity of the teeter hinge. In the construction phase, these values may be selected without restrictions. The disturbing frequency is equal to the rotational speed. The mass inertia factor of the turbine is mainly determined by the mass distribution and by the geometry of the blades. For a specific blade geometry, the mass inertia factor may be influenced by the choice of construction materials and by adding ballast material. The rigidity of the teeter hinge is determined by the stiffness of the different hinge elements, which normally are made of rubber or some other elastomeric material. Thus, it is relatively easy to change the rigidity, also in an existing teeter hinge, by exchanging the rubber elements to new ones with a different Young's modulus and possibly with a modified geometry.

To summerize, in accordance with the invention, the hub is constructed such that the operation is either supercritical or subcritical. By putting the invention into practise, the loads decrease considerably and both technical and economical advantages are achieved.

Short description of the drawings

The invention will be further described in detail below with reference to the appended drawings, in which

Figure 1 illustrates how a system consisting of a mass, a spring and a damper in general reacts on disturbances of different frequencies,
Figure 2 shows the principal structure of a wind turbine generator with a horizontal axis wind turbine,
Figure 3A shows a side elevation, partly as a sectional view, of a teeter hub according to the invention and Figure 3B shows the teeter hub as shown in Figure 3A in a front elevation view.

**Detailed description of embodiments of the invention**

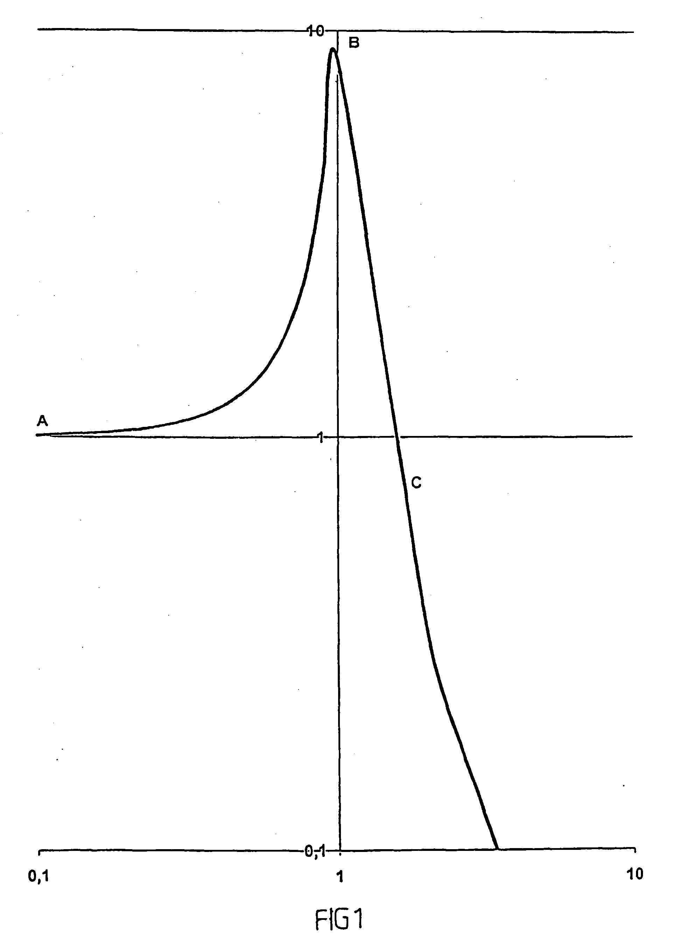

Figure 1 illustrates how a system consisting of a mass, a spring and a damper in general reacts on disturbances of different frequencies. The amplification (Y-direction in Fig. 1), i.e. the ratio of the amplitude of the system to the amplitude of the disturbance, is shown as a function of the ratio of the disturbing frequency to the eigenfrequency of the system (X-direction in Fig. 1). Point A indicates a state in which the disturbing frequency $\omega_{disturbance}$ is low relatively to the eigenfrequency of the teeter hinge $\omega_{resonance}$, i.e. the operation is subcritical according to classical mechanics, corresponding to an ideal hub with a relatively high degree of rigidity. The response is slightly larger than the disturbance, i.e. the amplification is slightly larger than 1. In point B, the disturbing frequency and the eigenfrequency are equal, i.e. the operation is critical. The amplification of the disturbance is large. Point C indicates a state in which the disturbing frequency is higher than the eigenfrequency, i.e. the operation is supercritical. The response is lower than in point A and significantly lower than in point B.

Figure 1 illustrates that operation in the range of point B, in which there is a significant amplification of the disturbance, should be avoided.

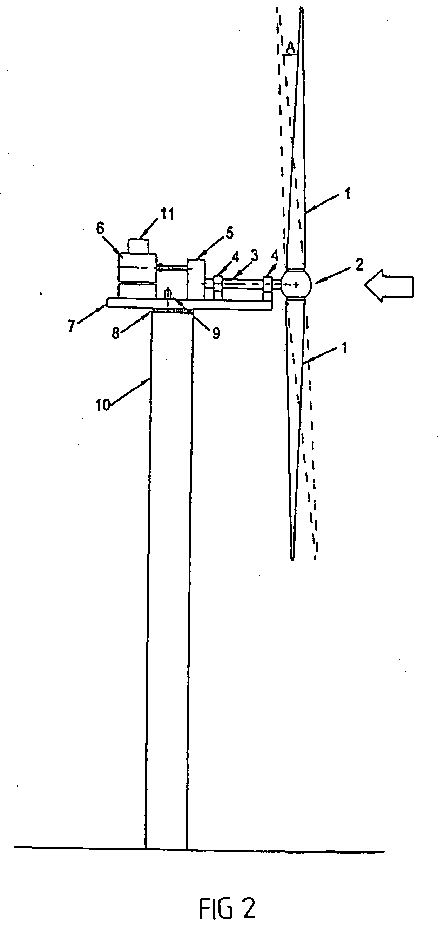

Figure 2 shows the general structure of a wind turbine generator with a horizontal axis wind turbine. Two aerodynamically shaped turbine blades (1) are connected to the hub (2) with a fixed or pivotal (along the longitudinal axis) connection. The hub (2) is connected to the turbine shaft (3), which is supported by the bearings (4). The turbine shaft (3) is connected to the gearbox (5), which transforms the low rotation speed of the turbine to a rotation speed conformable to the generator (6). The components of the machinery are supported by the machinery bed (7), which is connected to the yaw bearing (8). The yaw bearing (8) is rotatable on the tower (10) by means of the yaw mechanism (9). The tower is connected to solid ground by a foundation (not shown). The various functions may be more or less integrated with each other, which however does not affect the following description.

In Figure 2 is indicated that the hub (2) is a teetered hub, which implies that the two turbine blades (1) are rigidly connected to the hub (2). The hub (2) is hinged to the turbine shaft (3) and may teeter an angle **A**, as shown, in each direction.

The number of blades is normally two, but in one preferred embodiment the structure principle is applied to a turbine with one blade, and with the missing blade compensated by a counter weight.

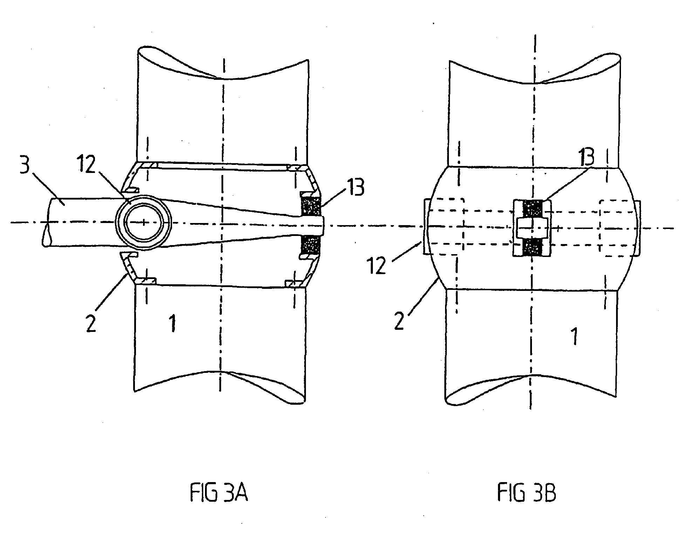

Figure 3 shows a teeter hub according to the invention. As above, the blades (1) are connected to the hub (2), which normally is a cast structure and is connected to the turbine shaft (3) by means of a hinge member. The hinge member includes a bearing (12), which normally is composed of two or four symmetrically disposed bearing elements. The spring elements (13) counteract the teeter movement and may be combined with dampers, either by selecting a spring material with some damping properties, or by providing dampers of some other type (not shown). The active part of both the bearing (12) and the spring elements (13) are preferably made of elastomeric material.

The bearing (12) and the spring elements (13) together form a hinge member (12,13) having a specific rigidity in relation to the axis of the hinge member and hence the bearing. In a preferred embodiment, the bearing (12) and the spring elements (13) have been integrated into one unit, e.g. a so-called flex-beam. In this case, as well as when neighbouring components (primarily the turbine blades) have some inherent softness, the spring constant of the spring elements (13) may include the impact of these elements.

In preferred embodiments additional advantages may be achieved by making the spring (13) progressive (i.e.

the spring constant increases with the dimensional change) or pre-stressed. A special type of progressive spring is achieved when there is a play between the spring element and the co-acting element, which results in a spring constant that is zero during the initial part of the teeter movement.

As described above, the structural parameters should by selected such that operation is avoided in the range in which the disturbing frequency is close to the critical frequency, i.e. the eigenfrequency of the teeter hinge. In preferred embodiments, the parameters are selected such that the disturbing frequency either is lower than 0.9 times the eigenfrequency or higher than 1.1 times the eigenfrequency. In addition, according to preferred embodiments, the disturbing frequency is normally higher than 0.1 times the eigenfrequency and lower than 10 times the eigenfrequency. Thus, the range between 0.1 and 0.9 times the eigenfrequency generates especially interesting preferred embodiments, in view of the requirements to avoid large extreme loads as described above.

As described above, the invention and the preferred embodiments of the invention as described imply essential technical and economical advantages when applied on one- and two-bladed wind turbine generators in particular.

Preferred embodiments as described above illustrate how the invention may be applied on wind turbines with one or two blades. However, the man skilled in the art may easily apply the invention on wind turbines with several blades and on neighbouring application areas, such as propellers for airplanes and ships, fans, turbines for other gaseous or liquid working media, etc.

## Claims

1. A turbine adapted for a gaseous or liquid working medium, in particular a wind turbine for a wind turbine generator, comprising

   a shaft (3), which is rotatable at a certain angular frequency ($\omega_{rotation}$),

   a hub (2), on which at least one turbine blade (1) is attached, and

   a hinge member (12, 13) disposed between said shaft (3) and said hub (2) and comprising a bearing (12) and spring elements (13), together forming a rigidity (k) against movements in the hinge member (12, 13),

   said turbine blade (1) having a mass inertia factor ($J_{turbine}$) relatively to the hinge member (12, 13) and being adapted to move through said gaseous or liquid flow, which has a flow direction essentially perpendicular to the rotational plane of said turbine blade (1), and has a varying flow velocity in this direction, such that the turbine is exposed to disturbance forces whose essential component has a disturbance frequency ($\omega_{disturbance}$) which is composed of said angular frequency ($\omega_{rotation}$), and

   that said hinge member (12, 13) forms a teeter hinge having an eigenfrequency ($\omega_{resonance}$), that is calculated at

   $$\omega_{resonance} = \sqrt{k / J_{turbin}} ,$$

   **characterised in that**
   the rigidity (k) of said hinge member (12, 13),
   the mass inertia factor ($J_{turbine}$) of said turbine blade (1) and
   the angular frequency ($\omega_{rotation}$)

   have been selected such that the condition $\omega_{rotation} \neq \sqrt{k / J_{turbin}}$ is fulfilled.

2. A turbine according to claim 1, **characterised in that** the ratio of the angular frequency ($\omega_{rotation}$) to the eigenfrequency of the teeter hinge ($\omega_{resonance}$) is 0.9 at most.

3. A turbine according to claim 2, **characterised in that** the ratio of the angular frequency ($\omega_{rotation}$) to the eigenfrequency of the teeter hinge ($\omega_{resonance}$) is at least 0. 1.

4. A turbine according to claim 3, **characterised in that** the ratio of the angular frequency ($\omega_{rotation}$) to the eigenfrequency of the teeter hinge ($\omega_{resonance}$) is at least 1.1.

5. A turbine according to claim 4, **characterised in that** the ratio of the angular frequency ($\omega_{rotation}$) to the eigenfrequency of the teeter hinge ($\omega_{resonance}$) is 10.0 at most.

6. A turbine according to any one of the preceding claims, **characterised in that** said hinge member (12, 13) includes dampers.

7.  A turbine according to any one of the preceding claims, **characterised in that** said spring elements (13) are progressive.

8.  A turbine according to any one of the preceding claims, **characterised in that** said spring elements (13) are pre-stressed.

9.  A wind turbine generator with a turbine according to any one of the preceding claims.

10. A method to design a turbine adapted for a gaseous or liquid working medium, in particular a wind turbine for a wind turbine generator, said turbine comprising a shaft (3), which is rotatable at a certain angular frequency ($\omega_{rotation}$), a hub (2), on which at least one turbine blade (1) is attached, and a hinge member (12, 13) disposed between said shaft (3) and said hub (2) and comprising a bearing (12) and spring elements (13), together forming a rigidity (k) against movements in the hinge member (12, 13), said turbine blade (1) having a mass inertia factor ($J_{turbine}$) relatively to the hinge member (12, 13) and being adapted to move through said gaseous or liquideous flow, which has a flow direction essentially perpendicular to the rotational plane of said turbine blade (1) and has a varying flow velocity in this direction, such that the turbine is exposed to disturbance forces whose essential component has a disturbance frequency ($\omega_{disturbance}$) which is composed of said angular frequency ($\omega_{rotation}$), and that said hinge member (12, 13) forms a teeter hinge having an eigenfrequency ($\omega_{resonance}$), that is calculated at

$$\omega_{resonance} = \sqrt{k / J_{turbin}} \, ,$$

**characterised in that** the rigidity (k) of said hinge member (12, 13),
the mass inertia factor ($J_{turbine}$) of said turbine blade (1), and

the angular frequency ($\omega_{rotation}$) are selected such that the condition $\omega_{rotation} \neq \sqrt{k / J_{turbin}}$ is fulfilled.

11. A method according to claim 10, **characterised in that** the rigidity (k) of said hinge (12, 13) is selected such that

the condition $\omega_{rotation} \neq \sqrt{k / J_{turbin}}$ is fulfilled at normal angular frequency ($\omega_{rotation}$).

**Patentansprüche**

1.  Turbine, die für ein gasförmiges oder flüssiges Arbeitsmedium angepasst ist, insbesondere eine Windturbine für einen Windturbinen-Generator mit
    einer Welle (3), die bei einer bestimmten Winkelfrequenz ($\omega_{Rotation}$) drehbar ist,
    einer Nabe (2), an der mindestens ein Turbinenblatt (1) angebracht ist, und einem Gelenkelement (12, 13), das zwischen der Welle (3) und der Nabe (2) angeordnet ist und ein Lager (12) und Federelemente (13) umfasst, die zusammen eine Festigkeit (k) gegen Bewegungen im Gelenkelement (12, 13) bilden,
    wobei das Turbinenblatt (1) einen Masseträgheitsfaktor ($J_{Turbine}$) relativ zum Gelenkelement (12, 13) hat und angepasst ist, sich durch die gasförmige oder flüssige Strömung zu bewegen, die eine Strömungsrichtung im Wesentlichen rechtwinklig zur Rotationsebene des Turbinenblattes (1) und eine variierende Strömungsgeschwindigkeit in diese Richtung hat, so dass die Turbine Störkräften ausgesetzt ist, deren wesentliche Komponente eine Störfrequenz ($\omega_{Strörung}$) hat, die aus der Winkelfrequenz ($\omega_{Rotation}$) zusammengesetzt ist, und

    das Gelenkelement (12, 13) ein Pendelelement mit einer Eigenfrequenz ($\omega_{Resonanz}$) bildet, die bei $\omega_{Resonanz} = \sqrt{k / J_{Turbine}}$ berechnet wird,
    **dadurch gekennzeichnet, dass**
    die Festigkeit (k) des Gelenkelements (12, 13)
    der Masseträgheitsfaktor ($J_{Turbine}$) des Turbinenblattes (1) und
    die Winkelfrequenz ($\omega_{Rotation}$)

    so ausgewählt wurden, dass die Bedingung $\omega_{Rotation} \neq \sqrt{k / J_{Turbine}}$ erfüllt ist.

2.  Turbine nach Anspruch 1, **dadurch gekennzeichnet, dass** das Verhältnis der Winkelfrequenz ($\omega_{Rotation}$) zur Eigenfrequenz des Pendelgelenks ($\omega_{Resonanz}$) höchstens 0,9 beträgt.

3.  Turbine nach Anspruch 2, **dadurch gekennzeichnet, dass** das Verhältnis der Winkelfrequenz ($\omega_{Rotation}$) zur Ei-

genfrequenz des Pendelgelenks ($\omega_{Resonanz}$) mindestens 0,1 beträgt.

4.  Turbine nach Anspruch 3, **dadurch gekennzeichnet, dass** das Verhältnis der Winkelfrequenz ($\omega_{rotation}$) zur Eigenfrequenz des Pendelgelenks ($\omega_{Resonanz}$) mindestens 1,1 beträgt.

5.  Turbine nach Anspruch 4, **dadurch gekennzeichnet, dass** das Verhältnis der Winkelfrequenz ($\omega_{Rotation}$) zur Eigenfrequenz des Pendelgelenks ($\omega_{Resonanz}$) höchstens 10,0 beträgt.

6.  Turbine nach einem der vorhergehenden Ansprüche, **dadurch gekennzeichnet, dass** das Gelenkelement (12, 13) Dämpfungseinrichtungen aufweist.

7.  Turbine nach einem der vorhergehenden Ansprüche, **dadurch gekennzeichnet, dass** die Federelemente (13) progressiv sind.

8.  Turbine nach einem der vorhergehenden Ansprüche, **dadurch gekennzeichnet, dass** die Federelemente (13) vorgespannt sind.

9.  Windturbinen-Generator mit einer Turbine nach einem der vorhergehenden Ansprüche.

10. Verfahren zur Gestaltung einer Turbine, die für ein gasförmiges oder flüssiges Arbeitsmedium angepasst ist, insbesondere einer Windturbine für einen windturbinen-Generator, wobei die Turbine eine Welle (3), die bei einer bestimmten Winkelfrequenz ($\omega_{Rotation}$) drehbar ist, eine Nabe (2), an der mindestens ein Turbinenblatt (1) angebracht ist, und ein Gelenkelement (12, 13) aufweist, das zwischen der Welle (3) und der Nabe (2) angeordnet ist und ein Lager (12) und Federelemente (13) aufweist, die gemeinsam eine Festigkeit (k) gegen Bewegungen im Gelenkelement (12, 13) bilden, wobei das Turbinenblatt (1) einen Masseträgheitsfaktor ($J_{Turbine}$) relativ zum Gelenkelement (12, 13) hat und angepasst ist, sich durch die gasförmige oder flüssige Strömung zu bewegen, die eine Strömungsrichtung im Wesentlichen rechtwinklig zur Rotationsebene des Turbinenblattes (1) und eine variierende Strömungsgeschwindigkeit in diese Richtung hat, so dass die Turbine Störkräften ausgesetzt ist, deren wesentliche Komponente eine Störfrequenz ($\omega_{Störung}$) hat, die sich aus der Winkelfrequenz ($\omega_{Rotation}$) zusammensetzt, und das Gelenkelement (12, 13) ein Pendegelenk mit einer Eigenfrequenz ($\omega_{Resonanz}$) bildet, die bei $\omega_{Resonanz} = \sqrt{k/J_{Turbine}}$ berechnet wird,
    **dadurch gekennzeichnet, dass**
    die Festigkeit (k) des Gelenkelements (12, 13),
    der Masseträgheitsfaktor ($J_{Trurbine}$) des Turbinenblattes (1) und
    die Winkelfrequenz ($\omega_{Rotation}$) so ausgewählt sind,

    dass die Bedingung $\omega_{Rotation} \neq \sqrt{k/J_{Turbine}}$ erfüllt ist.

11. Verfahren nach Anspruch 10, **dadurch gekennzeichnet, dass** die Festigkeit (k) des Gelenks (12, 13) so ausgewählt ist, dass die Bedingung $\omega_{Rotation} \neq \sqrt{k/J_{Turbine}}$ bei einer normalen Winkelfrequenz ($\omega_{Rotation}$) erfüllt ist.

**Revendications**

1.  Turbine adaptée pour un milieu de travail gazeux ou liquide, en particulier une turbine éolienne pour une turbine d'aérogénérateur, comprenant
    un arbre (3), qui est mobile en rotation à une certaine fréquence angulaire ($\omega_{rotation}$),
    un moyeu (2), auquel au moins une pale (1) de turbine est assujettie, et
    un élément (12, 13) d'articulation disposé entre ledit arbre (3) et ledit moyeu (2) et comprenant un palier (12) et des éléments (13) de ressort, fournissant conjointement une certaine rigidité (k) contre des mouvements dans l'élément (12, 13) d'articulation,
    ladite pale (1) de turbine ayant un facteur d'inertie massique ($J_{turbine}$) par rapport à l'élément (12, 13) d'articulation et étant apte à bouger dans ledit écoulement gazeux ou liquide, qui a une direction d'écoulement essentiellement perpendiculaire au plan de rotation de ladite pale (1) de turbine, et qui a une vélocité d'écoulement qui varie dans cette direction, de sorte que la turbine est exposée à des forces de perturbation dont une composante essentielle a une fréquence de perturbation ($\omega_{perturbation}$) qui est composée de ladite fréquence angulaire ($\omega_{rotation}$), et

que ledit élément (12, 13) d'articulation forme une articulation basculante ayant une fréquence propre ($\omega_{\text{résonance}}$),

qui est calculée à $\omega_{\text{résonance}} = \sqrt{k/J_{\text{turbine}}}$,

**caractérisée en ce que**

la rigidité (k) dudit élément (12, 13) d'articulation, le facteur d'inertie massique ($J_{\text{turbine}}$) de ladite pale (1) de turbine et la fréquence angulaire ($\omega_{\text{rotation}}$) sont choisis pour satisfaire à la condition $\omega_{\text{rotation}} \neq \sqrt{k/J_{\text{turbine}}}$.

2. Turbine selon la revendication 1, **caractérisée en ce que** le rapport de la fréquence angulaire ($\omega_{\text{rotation}}$) à la fréquence propre de l'articulation basculante ($\omega_{\text{résonance}}$) est d'au plus 0,9.

3. Turbine selon la revendication 2, **caractérisée en ce que** le rapport de la fréquence angulaire ($\omega_{\text{rotation}}$) à la fréquence propre de l'articulation basculante ($\omega_{\text{résonance}}$) est d'au moins 0,1.

4. Turbine selon la revendication 3, **caractérisée en ce que** le rapport de la fréquence angulaire ($\omega_{\text{rotation}}$) à la fréquence propre de l'articulation basculante ($\omega_{\text{résonance}}$) est d'au moins 1,1.

5. Turbine selon la revendication 4, **caractérisée en ce que** le rapport de la fréquence angulaire ($\omega_{\text{rotation}}$) la fréquence propre de l'articulation basculante ($\omega_{\text{résonance}}$) est d'au plus 10,0.

6. Turbine selon l'une quelconque des revendications précédentes, **caractérisée en ce que** ledit élément (12, 13) d'articulation inclut des amortisseurs.

7. Turbine selon l'une quelconque des revendications précédentes, **caractérisée en ce que** lesdits éléments (13) de ressort sont progressifs.

8. Turbine selon l'une quelconque des revendications précédentes, **caractérisée en ce que** lesdits éléments (13) de ressort sont précontraints.

9. Turbine d'aérogénérateur doté d'une turbine selon l'une quelconque des revendications précédentes.

10. Procédé pour concevoir une turbine adaptée pour un milieu de travail gazeux ou liquide, en particulier une turbine éolienne pour une turbine d'aérogénérateur, ladite turbine comprenant un arbre (3), qui est mobile en rotation à une certaine fréquence angulaire ($\omega_{\text{rotation}}$), un moyeu (2), auquel au moins une pale (1) de turbine est assujettie, et un élément (12, 13) d'articulation disposé entre ledit arbre (3) et ledit moyeu (2) et comprenant un palier (12) et des éléments (13) de ressort, assurant conjointement une certaine rigidité (k) contre des mouvements dans l'élément (12, 13) d'articulation, ladite pale (1) de turbine ayant un facteur d'inertie massique ($J_{\text{turbine}}$) par rapport à l'élément (12, 13) d'articulation et étant apte à bouger dans ledit écoulement gazeux ou liquide, qui a une direction d'écoulement essentiellement perpendiculaire au plan de rotation de ladite pale (1) de turbine, et qui a une vélocité d'écoulement qui varie dans cette direction, de sorte que la turbine est exposée à des forces de perturbation dont une composante essentielle a une fréquence de perturbation ($\omega_{\text{perturbation}}$) qui est composée de ladite fréquence angulaire ($\omega_{\text{rotation}}$), et que ledit élément (12, 13) d'articulation forme une articulation basculante ayant une fréquence propre ($\omega_{\text{résonance}}$),

qui est calculée à $\omega_{\text{résonance}} = \sqrt{k/J_{\text{turbine}}}$,

**caractérisé en ce que** la rigidité (k) dudit élément (12, 13) d'articulation, le facteur d'inertie massique ($J_{\text{turbine}}$) de ladite pale (1) de turbine et la fréquence angulaire ($\omega_{\text{rotation}}$) sont choisis pour satisfaire à la condition $\omega_{\text{rotation}} \neq \sqrt{k/J_{\text{turbine}}}$.

11. Procédé selon la revendication 10, **caractérisé en ce que** la rigidité (k) de ladite articulation (12, 13) est choisie pour, à une fréquence angulaire normale ($\omega_{\text{rotation}}$), satisfaire à la condition $\omega_{\text{rotation}} \neq \sqrt{k/J_{\text{turbine}}}$.

FIG 1

FIG 2

FIG 3A

FIG 3B